# EUROPÄISCHE PATENTSCHRIFT

(11) **EP 2 147 615 B1**
(45) Veröffentlichungstag und Bekanntmachung des Hinweises auf die Patenterteilung: **18.05.2011**
(21) Anmeldenummer: 08013128.7
(22) Anmeldetag: 22.07.2008
(51) Int. Cl.: A47C 20/04, F16H 25/06

(54) **Drehantrieb**
Rotary drive
Entraînement rotatif

(43) Veröffentlichungstag der Anmeldung: 27.01.2010
(73) Patentinhaber: Baumeister, Karlheinz, 72336 Balingen-Ostdorf (DE)
(72) Erfinder: Baumeister, Karlheinz, 72336 Balingen-Ostdorf (DE)
(74) Vertreter: Patentanwälte Westphal, Mussgnug & Partner

(56) Entgegenhaltungen:
- EP-A- 1 477 086
- FR-A- 1 328 909
- FR-A- 2 161 491
- US-B1- 6 253 632

## Beschreibung

Die Erfindung betrifft einen Drehantrieb gemäß dem Oberbegriff des Patentanspruchs 1.

Drehantriebe dieser Gattung dienen dazu, zwei Bauteile gegeneinander zu drehen bzw. zu schwenken. Solche Bauteile können Türen, Deckel oder dergleichen von Möbeln oder Fahrzeugen sein. Ebenso können solche Drehantriebe verwendet werden um Möbelteile gegeneinander zu verschwenken, z. B. Kopf- oder Fußteile von Bettgestellen gegenüber dem Bettrahmen.

Aus der FR 1 328 909 A ist ein Drehantrieb der eingangs genannten Gattung bekannt, der ein Außenrohr aufweist, welches mit einem zu drehenden Bauteil verbunden wird. In dem Außenrohr ist koaxial eine Gewindespindel angeordnet, die durch einen axial außerhalb des Außenrohres angeordneten Motor rotierend antreibbar ist. Die Gewindespindel treibt über eine Spindelmutter einen Drallschieber an, der unverdrehbar und axial verschiebbar in dem Außenrohr angeordnet ist. In dem dem Motor entgegengesetzten Ende des Außenrohres ist koaxial eine Drallwelle angeordnet, die verdrehbar und axial fest in dem Außenrohr gelagert ist. Die Drallwelle ist unverdrehbar mit dem zweiten Bauteil verbunden. Der Drallschieber umgreift die Drallwelle und greift mit einem inneren Gewindeprofil in ein Steilgewinde der Drallwelle ein. Je nach Drehrichtung der Gewindespindel verschiebt sich der Drallschieber axial in entgegengesetzten Richtungen im Außenrohr, so dass der Drallschieber und mit diesem das Außenrohr gegenüber der festgehaltenen Drallwelle in den entsprechenden Drehrichtungen gedreht wird. Die Steigung des nicht hemmenden Steilgewindes der Drallwelle beträgt ein Vielfaches der Steigung der Gewindespindel, so dass sich eine starke Drehzahluntersetzung bzw. Drehmomentübersetzung zwischen dem Antriebsmotor und dem Drehantrieb ergibt.

In der DE 103 21 807 A1 ist in den Figuren 1 und 2 ein Drehantrieb gezeigt, bei dem in einem Außenrohr axial verschiebbar und unverdrehbar ein Drallschieber angeordnet ist, der von einem Elektromotor mittels einer Gewindespindel in dem Außenrohr verschoben wird. Achsparallel zu der Gewindespindel ist eine Drallwelle mit einem Steilgewinde angeordnet, die durch ein Gewindeprofil des Drallschiebers hindurchgreift. Die Drallwelle ist an beiden Enden axial aus dem Außenrohr herausgeführt. Wird der Drallschieber mittels der Gewindespindel axial in dem Außenrohr verschoben, so dreht sich die Drallwelle, wie dies z.B. für Drillbohrer bekannt ist. Die an beiden Enden aus dem Außenrohr herausgeführte Drallwelle wird somit gegenüber dem Außenrohr verdreht. Die Steigung des nichthemmenden Steilgewindes der Drallwelle beträgt ein Vielfaches der Steigung der Gewindespindel, so dass sich eine starke Drehzahluntersetzung bzw. Drehmomentübersetzung zwischen dem Antriebsmotor und dem Drehantrieb ergibt. Nachteilig ist dabei, dass der Antriebsmotor außerhalb des Außenrohrs angeordnet und gegenüber diesem abgewinkelt ist. Außerdem führt die achsparallele Anordnung der Gewindespindel und der Drallwelle zu einem relativ großen Gesamtdurchmesser des Drehantriebs.

Weiter ist in der DE 103 21 807 A1 in den Figuren 6 und 7 ein Drehantrieb gezeigt, bei welchem die durch den abgewinkelt angeordneten äußeren Antriebsmotor angetriebene Gewindespindel koaxial in dem Außenrohr angeordnet ist. Auf der Gewindespindel läuft ein Drallschieber, der durch zusätzliche Linearführungen unverdrehbar geführt ist, die achsparallel zu der Gewindespindel in dem Außenrohr angeordnet sind. Auf dem Drallschieber sitzt das Außenrohr mit einem Steilgewinde, so dass die axiale Verschiebung des Drallschiebers zu einer Verdrehung des Außenrohres führt. Neben der auch hier abgewinkelten Anordnung des Antriebsmotors außerhalb des Außenrohres ist bei dieser Ausführung nachteilig, dass das Außenrohr Drallnuten aufweist, so dass das Außenrohr nicht in einfacher Weise in einem Strang- oder Ziehverfahren hergestellt werden kann. Die achsparallel in dem Außenrohr angeordneten Linearführungen vergrößern zudem den Durchmesser des Drehantriebs.

Bei diesen bekannten Drehantrieben wirkt das starke Drehmoment zwischen den zwei Bauteilen in beiden Drehrichtungen. Dient der Drehantrieb z. B. zum Hochschwenken eines Bauteils, z.B. eines Deckels oder des Kopf- oder Fußteils eines Bettgestells, so wirkt dieses starke Drehmoment auch beim Absenken des Bauteils. Gerät eine Person bei dem Absenken des Bauteils versehentlich unter dieses Bauteil, so wird die Person zwischen den gegeneinander verschwenkten Bauteilen unter der Wirkung dieses starken Drehmoments eingeklemmt, was zu einer Gefährdung und Verletzung führen kann.

Der Erfindung liegt die Aufgabe zu Grunde, einen Drehantrieb der eingangs genannten Gattung so zu verbessern, dass kompaktere Außenabmessungen realisiert werden können, die Herstellung des Drehantriebs vereinfacht wird und eine höhere Betriebssicherheit gewährleistet ist.

Diese Aufgabe wird erfindungsgemäß gelöst durch einen Drehantrieb mit den Merkmalen des Patentanspruchs 1.

Vorteilhafte Ausführungen der Erfindung sind in den Unteransprüchen angegeben.

Bei dem erfindungsgemäßen Drehantrieb sind sämtliche mechanischen Komponenten koaxial im Inneren des Außenrohres angeordnet. Insbesondere ist auch das Antriebselement, z. B. ein Elektromotor, eine Gasfeder oder eine sonstige fluibetätigte Antriebseinheit koaxial im Außenrohr untergebracht. Der vollständig koaxiale Aufbau des gesamten Drehantriebs ergibt eine kompakte Dimensionierung. Insbesondere kann auch ein Drehantrieb für starke Dreh- bzw. Schwenkbewegungen mit relativ geringem Durchmesser realisiert werden. Weil sämtliche Komponenten im Inneren des Außenrohres angeordnet sind, kann der gesamte Drehantrieb vollständig gekapselt ausgeführt werden. Am Umfang umschließt das Außenrohr den gesamten mechanischen Aufbau. An den axialen Enden ist das Außenrohr entweder durch ein gegenüber dem Außenrohr drehbares Endstück oder durch eine fest in das Außenrohr eingesetzte Abschlusskappe abgeschlossen. Diese vollständige Kapselung macht den Drehantrieb unanfällig gegen Störungen und weitestgehend wartungsfrei. Vor allem bei der Verwendung für Möbel, z. B. Betten im Krankenhausbetrieb oder bei ähnlichen Anwendungen ist die vollständige Kapselung des Drehantriebs aus hygienischen Gründen vorteilhaft.

Erfindungsgemäß ist aus Sicherheitsgründen ein sogenannter "Freilauf" des Drehantriebs vorgesehen. Unter einem solchen Freilauf wird eine Maßnahme verstanden, durch welche der Drehantrieb nur in einem Drehsinn aktiv wirksam ist, während in dem entgegengesetzten Drehsinn das Antriebsmoment des Drehantriebs nicht wirksam ist. Beispielsweise kann ein Deckel oder das Kopfteil eines Bettgestells unter dem aktiven Drehmoment des Drehantriebs hochgeschwenkt werden, während beim Schließen des Deckels bzw. dem Niederschwenken des Kopfteils der Drehantrieb nicht aktiv wirksam ist. Der Deckel bzw. das Kopfteil werden dann aufgrund des Freilaufs nur unter ihrem Eigengewicht nach unten verschwenkt, so dass keine Gefährdung von Personen möglich ist, die sich beim Abwärtsschwenken unterhalb des Deckels oder Kopfteils oder eines sonstigen Bauteils befinden.

Ein solcher Freilauf ist in einfacher Weise dadurch realisiert, dass der Antrieb nur in einer axialen Richtung drückend an dem Drallschieber angreift, während bei der entgegengesetzten Antriebsrichtung der Drallschieber nicht zwangsläufig vom Antrieb mitgenommen wird, sondern diesem nur auf Grund des außen am Drehantrieb angreifenden Gegenmoments folgt.

Bei dem Drehantrieb sind die im Außenrohr ausgebildeten Führungsrillen achsparallel, so dass das Außenrohr in einfacher Weise im Strang- oder Ziehverfahren hergestellt werden kann und eine hohe Steifigkeit und Stabilität aufweist.

Der Drehantrieb kann in der Weise ausgebildet sein, dass ein gegenüber dem Außenrohr verdrehbares Endstück nur an einem Ende des Außenrohres gelagert ist oder dass an beiden Enden des Außenrohres entsprechende drehbare Endstücke angeordnet sind. Dadurch ist eine große Variabilität im Einsatz des Drehantriebs gegeben, da dieser nur mit einem Ende an dem einen Bauteil und mit dem Außenrohr an dem anderen Bauteil montiert werden kann oder mit beiden Enden an dem einen Bauteil und mit dem Außenrohr an dem anderen Bauteil. In einer besonderen Ausführung kann der Drehantrieb auch mit zwei Drallwellen ausgebildet sein, die jeweils mit einem Endstück an einem der beiden Enden verbunden sind. Es können somit unterschiedliche Drehbewegungen zwischen dem Außenrohr und jedem der beiden Endstücke erzeugt werden.

In einer bevorzugten Ausführungsform ist das Antriebselement ein Motor, der eine koaxial in dem Außenrohr gelagerte Gewindespindel drehend antreibt. Eine auf der Gewindespindel laufende Spindelmutter setzt die Drehung in eine Axialbewegung um, die wiederum die axiale Relativbewegung zwischen der Drallwelle und dem Drallschieber bewirkt. Das Verhältnis der Steigungen des nichtselbsthemmenden Steilgewindes der Drallwelle und der Gewindespindel bestimmt dabei die Drehzahluntersetzung bzw. die Drehmomentübersetzung zwischen dem Motor und dem Drehantrieb. Es können somit sehr hohe Drehzahluntersetzungen bzw. starke Drehmomentübersetzungen in konstruktiv einfacher Weise realisiert werden. Ein besonderer Vorteil ergibt sich dadurch, dass die Steigung des Steilgewindes der Drallwelle auch über deren axiale Länge, d. h. über den axialen Verschiebungsweg des Drallschiebers variieren kann. Wird die Drallwelle mit konstanter Steigung des Steilgewindes über den gesamten Weg des Drallschiebers ausgebildet, so ist die Winkelgeschwindigkeit und das Drehmoment über den gesamten Schwenkwinkel des Drehantriebs konstant. Nimmt die Steigung des Teilgewindes der Drallwelle progressiv zu oder degressiv ab, so wird die Drehgeschwindigkeit in Abhängigkeit vom Drehwinkel vergrößert oder verkleinert bzw. das Drehmoment verkleinert oder vergrößert. Durch diese Variation der Steigung des Steilgewindes kann somit der Drehantrieb dem jeweiligen Anwendungszweck optimal angepasst werden. Beispielsweise kann am Beginn und am Ende einer Schwenkbewegung die Winkelgeschwindigkeit verringert und in der Mitte des Schwenkweges vergrößert werden.

Im Folgenden wird die Erfindung anhand von in der Zeichnung dargestellten Ausführungsbeispielen näher erläutert. Es zeigen:
- Fig. 1: einen Axialschnitt durch den Drehantrieb in einer ersten Ausführung,
- Fig. 2: eine Teildarstellung dieses Drehantriebes,
- Fig. 3: einen Schnitt längs der Linie III-III in Fig. 1,
- Fig. 4: einen Axialschnitt durch den Drehantrieb in einer zweiten Ausführung,
- Fig. 5: einen Schnitt gemäß der Schnittlinie V-V in Fig. 4,
- Fig. 6: einen Schnitt gemäß der Schnittlinie VI-VI in Fig. 4,
- Fig. 7: eine Detailansicht der ersten und zweiten Ausführung,
- Fig. 8: einen Axialschnitt der Fig. 7,
- Fig. 9: einen Axialschnitt durch den Drehantrieb in einer dritten Ausführung,
- Fig. 10: einen Schnitt gemäß der Schnittlinie X-X in Fig. 9,
- Fig. 11: eine axiale Stirnansicht der Fig. 9 von links,
- Fig. 12: einen Axialschnitt durch den Drehantrieb in einer vierten Ausführung,
- Fig. 13: einen Schnitt gemäß der Schnittlinie XIII-XIII in Fig. 12,
- Fig. 14: eine axiale Stirnansicht in Fig. 12 von links,
- Fig. 15: einen Axialschnitt durch den Drehantrieb der vierten Ausführung in einer gegenüber Fig. 12 verschiedenen Betriebsstellung,
- Fig. 16: eine axiale Stirnansicht der Fig. 12 von rechts,
- Fig. 17: einen Schnitt gemäß der Schnittlinie XVII-XVII in Fig. 15,
- Fig. 18: einen Axialschnitt des Drehantriebs in einer fünften Ausführung,
- Fig. 19: einen Schnitt gemäß der Schnittlinie XIX-XIX in Fig. 18,
- Fig. 20: einen Axialschnitt durch den Drehantrieb in einer sechsten Ausführung,
- Fig. 21: einen Schnitt gemäß der Schnittlinie XXI-XXI in Fig. 20,
- Fig. 22: einen Axialschnitt durch den Drehantrieb in einer siebten Ausführung,
- Fig. 23: einen Schnitt gemäß der Schnittlinie XXIII-XXIII in Fig. 22,
- Fig. 24: einen Axialschnitt des Drehantriebs in einer achten Ausführung,
- Fig. 25: einen Schnitt gemäß der Schnittlinie XXV-XXV in Fig. 24,
- Fig. 26: einen Schnitt gemäß der Schnittlinie XXVI-XXVI in Fig. 24,
- Fig. 27: einen Axialschnitt des Drehantriebs in einer neunten Ausführung,
- Fig. 28: eine Schnitt gemäß der Schnittlinie XXVIII-XXVIII in Fig. 27,
- Fig. 29: einen Axialschnitt durch den Drehantrieb in einer zehnten Ausführung.

Der erfindungsgemäße Drehantrieb dient zum gegenseitigen Verschwenken zweier Bauteile, z. B. zweier Möbelelemente. Es können bspw. ein Deckel oder eine Tür gegenüber einem Korpus verschwenkt werden oder insbesondere das Kopfteil eines Bettes gegenüber dem Bettrahmen. Dabei ist jeweils ein Außenrohr des Drehantriebs mit einem Bauteil fest verbunden, während ein oder zwei Endstücke an den Enden des Außenrohres mit dem anderen Bauteil fest verbunden sind.

In den nachfolgenden Beschreibung werden jeweils die gleichen Bezugszeichen für funktionsmäßig übereinstimmende Teile verwendet.

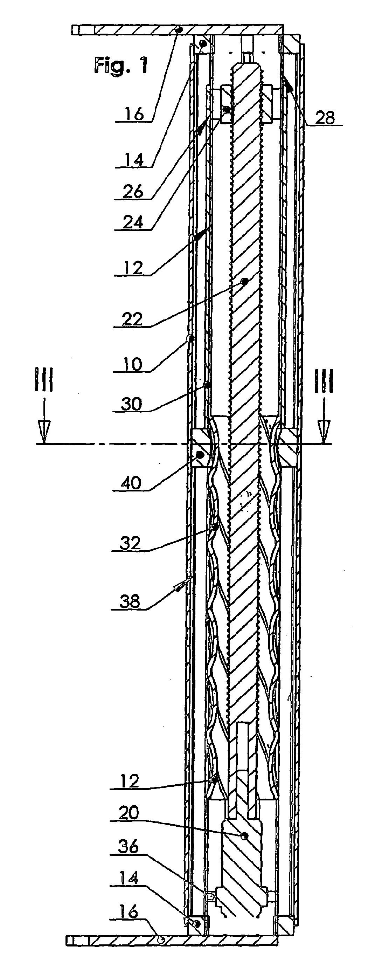

Ein erstes Ausführungsbeispiel des Drehantriebs ist in den Figuren 1, 2, 3, 7 und 8 dargestellt. Der Drehantrieb weist ein Außenrohr 10 auf, in welchem koaxial durchgehend ein Innenrohr 12 angeordnet ist. Das Innenrohr 12 ist an beiden Enden drehbar und axial unverschiebbar in einer Abschlusskappe 14 des Außenrohres 10 gelagert. Das Innenrohr 12 führt an beiden Enden jeweils mit einem Endstück 16 aus dem Außenrohr 10 heraus. An dem Endstück 16 kann bspw. eine radial abstehende Befestigungslasche 18 angebracht sein.

Bei der Verwendung des Drehantriebs zum Verschwenken z. B. des Kopfteils oder Fußteils eines Bettgestells wird das Innenrohr 12 mit den Endstücken 16 mittels der Befestigungslaschen 18 an dem Bettrahmen angebracht, während das Außenrohr 10 über entsprechende Hebel an dem Kopfteil bzw. Fußteil angreift. Das Außenrohr 10 mit den Abschlusskappen 14 und den Endstücken 16 bildet dabei einen vollständig gekapselten Antrieb, was insbesondere für die Verwendung bei Krankenhausbetten aus hygienischen Gründen von Vorteil ist.

An einem Ende des Innenrohres 12 sitzt koaxial fest in diesem Innenrohr 12 ein Antriebselement, welches als Motor 20, insbesondere als Elektromotor, ausgebildet ist. Die koaxiale Motorwelle treibt drehend eine Gewindespindel 22 an, welche koaxial in dem Innenrohr 12 angeordnet ist. Auf der Gewindespindel 22 läuft eine Spindelmutter 24, welche axial verschiebbar und unverdrehbar in dem Innenrohr 12 geführt ist. Hierzu weist die Spindelmutter 24 radial nach außen abstehende Vorsprünge 26 auf, die in axialen Führungsschlitzen 28 laufen, die an dem dem Motor 20 entgegengesetzten Ende des Innenrohres 12 ausgebildet sind. An den vorzugsweise diametral angeordneten Vorsprüngen 26 ist außerhalb des Innenrohres 12 ein das Innenrohr 12 koaxial umschließendes Schubrohr 30 befestigt. Das Schubrohr 30 liegt somit koaxial zwischen dem Innenrohr 12 und dem Außenrohr 10 und ist jeweils von diesen radial beabstandet. Das Schubrohr 30 erstreckt sich von der Spindelmutter 24 und deren Vorsprüngen 26 in axialer Richtung gegen das motorseitige Ende.

Das Innenrohr 12 ist in dem axialen Bereich zwischen den Führungsschlitzen 28 und dem Motor 20 als Drallwelle 32 ausgebildet, indem der Außenumfang des Innenrohres 12 mit einem Steilgewinde 34 ausgeformt ist.

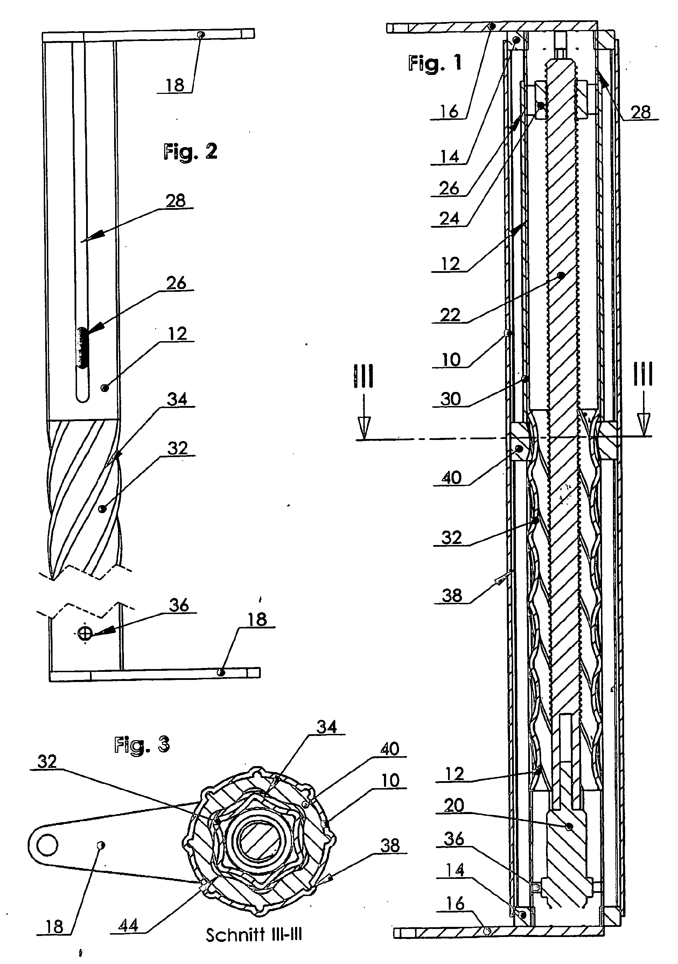

Figur 2 zeigt im Detail in einer Seitenansicht das Innenrohr 12 mit den Befestigungslaschen 18 an seinen beiden Enden, mit einem der Führungsschlitze 28, in welchem der Vorsprung 26 der Spindelmutter 24 sichtbar ist, mit dem anschließenden Steilgewinde 34 der Drallwelle 32 und mit Befestigungszapfen 36 des Motors 20.

Das Außenrohr 10 ist an seinem Innenumfang mit achsparallel verlaufenden Führungsrillen 38 ausgebildet. Wie Figur 3 zeigt, können diese Führungsrillen 38 bspw. als Auswölbungen der Wandung des Außenrohres 10 ausgebildet sein. Das Außenrohr 10 mit den achsparallelen Führungsrillen 38 wird vorzugsweise als gezogenen Rohr hergestellt. Ein Drallschieber 40 ist axial verschiebbar und unverdrehbar in dem Außenrohr 10 geführt. Hierzu greift der Drallschieber 40 mit achsparallelen Vorsprüngen 42 an seinem Außenumfang formschlüssig in die Führungsrillen 38. Der Drallschieber 40 umschließt die Drallwelle 32 koaxial und sitzt mit einem inneren Gewindeprofil 44 auf dem Steilgewinde 34 der Drallwelle 32, wie dies z.B. von Drillbohrern bekannt ist. Die axiale Abmessung des Gewindeprofils 44 ist wesentlich geringer als die Steigung des Steilgewindes 34. Das Gewindeprofil 44 kann insbesondere nur durch eine axial flache Scheibe gebildet sein, die einen dem Querschnittsprofil des Steilgewindes 34 entsprechenden Durchbruch aufweist. Das Schubrohr 30 stützt sich mit seinem von der Spindelmutter 24 abgewandten Ende axial frei an dem Drallschieber 40 ab.

Der Drehantrieb in der ersten Ausführung arbeitet in folgender Weise.

Wird der Motor 20 in einem Drehsinn - Antriebsdrehsinn - angetrieben, so zieht die von dem Motor 20 angetriebene Gewindespindel 22 die Spindelmutter 24 axial gegen den Motor 20, da die Spindelmutter 24 unverdrehbar in den Führungsschlitzen 28 des Innenrohres 12 geführt ist. Die Spindelmutter 24 drückt dabei mit dem Schubrohr 30 axial den Drallschieber 40 gegen das motorseitige Ende. Der Drallschieber 40, der gegenüber dem Schubrohr 30 verdrehbar ist, dreht sich bei diesem axialen Vorschub auf dem Steilgewinde 34 der Drallwelle 32. Da der Drallschieber 40 in dem Außenrohr 10 axial verschiebbar und unverdrehbar geführt ist, nimmt die Drehung des Drallschiebers 40 das Außenrohr 10 mit, sodass sich das Außenrohr 10 gegenüber dem Innenrohr 12 und dessen Endstücken 16 dreht.

Das nicht hemmende Steilgewinde 34 der Drallwelle 32 weist eine wesentlich größere Steigung auf als die Gewindespindel 22, sodass die Drehung des Motors 20 mit einer sehr starken Drehzahluntersetzung und einer sehr starken Drehmomentübersetzung in die Drehung des Außenrohres 10 umgesetzt wird.

Wird der Motor 20 in dem zum Antriebsdrehsinn entgegengesetzten Drehsinn angetrieben, so läuft die Spindelmutter 24 auf der Gewindespindel 22 in der entgegengesetzten axialen Richtung, d. h. von dem Motor 20 weg. Da das Schubrohr 30 nur frei an dem Drallschieber 40 anliegt, nimmt die Spindelmutter 24 mit dem Schubrohr 30 den Drallschieber 40 bei dieser Axialbewegung nicht mit. Das Außenrohr 10 wird somit durch den Motor 20 bei diesem Drehsinn des Motors 20 nicht zwangsweise mitgenommen. Da das Steilgewinde 34 der Drallwelle 32 nicht selbsthemmend ist, kann der Drallschieber 40 jedoch durch ein entsprechendes auf das Außenrohr 10 wirkendes Drehmoment verschoben werden und kann der Spindelmutter 24 mit dem Schubrohr 30 in der von dem Motor 20 abgewandten Axialrichtung frei folgen. Der Drehantrieb wirkt somit nur in einer Drehrichtung aktiv, während er in der entgegengesetzten Drehrichtung einen sogenannten "Freilauf" aufweist. Dies ist eine für viele Anwendungsfälle erwünschte Sicherheitsmaßnahme. Wird bspw. ein Bauteil mittels des Drehantriebs gegen sein Eigengewicht hochgeschwenkt, so erfolgt das Abwärtsschwenken aufgrund des Freilaufs ausschließlich durch das Eigengewicht dieses Bauteils und nicht unter dem übersetzten Drehmoment des Motors 20. Befindet sich eine Person mit einem Körperteil versehentlich unter dem Bauteil, so wirkt bei der Abwärtsbewegung nur das Eigengewicht des Bauteils, nicht jedoch das Drehmoment des Motors 20, sodass eine Gefährdung oder Schädigung der Person vermieden wird.

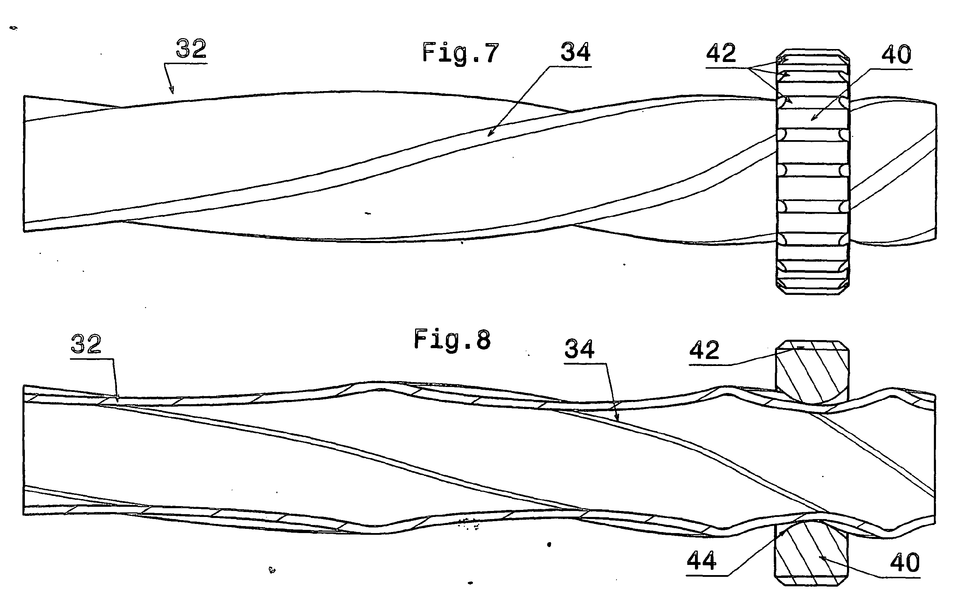

In den Figuren 7 und 8 ist die Drallwelle 32 mit dem Drallschieber 40 im Detail gezeigt. Es ist erkennbar, dass der Drallschieber 40 mit seinem inneren Gewindeprofil 44 nur eine sehr geringe axiale Abmessung im Verglich zur Steigung des Steilgewindes 34 der Drallwelle 32 aufweist. Aus den Figuren 7 und 8 geht eine weitere Variante hervor, bei welcher das Steilgewinde 34 der Drallwelle 32 mit sich ändernder Steigung ausgebildet ist. Die Änderung der Steigung des Steilgewindes 34 bedeutet eine Änderung der Drehzahluntersetzung bzw. der Drehmomentübersetzung. Durch diese Änderung der Steigung des Steilgewindes 34 über die axiale Länge der Drallwelle 32 ist es möglich, den Drehantrieb nicht nur mit konstanter Untersetzung (bei gleichbleibender Steigung des Steilgewindes 34), sondern auch mit progressiver oder degressiver Untersetzung auszubilden. Bspw. kann eine Schwenkbewegung im mittleren Bereich des Schwenkweges mit höherer Schwenkgeschwindigkeit und zu Beginn und am Ende des Schwenkweges mit geringerer Schwenkgeschwindigkeit ausgebildet werden. Eine vielseitige Anpassung des Drehantriebes an den jeweiligen Anwendungsfall ist somit möglich.

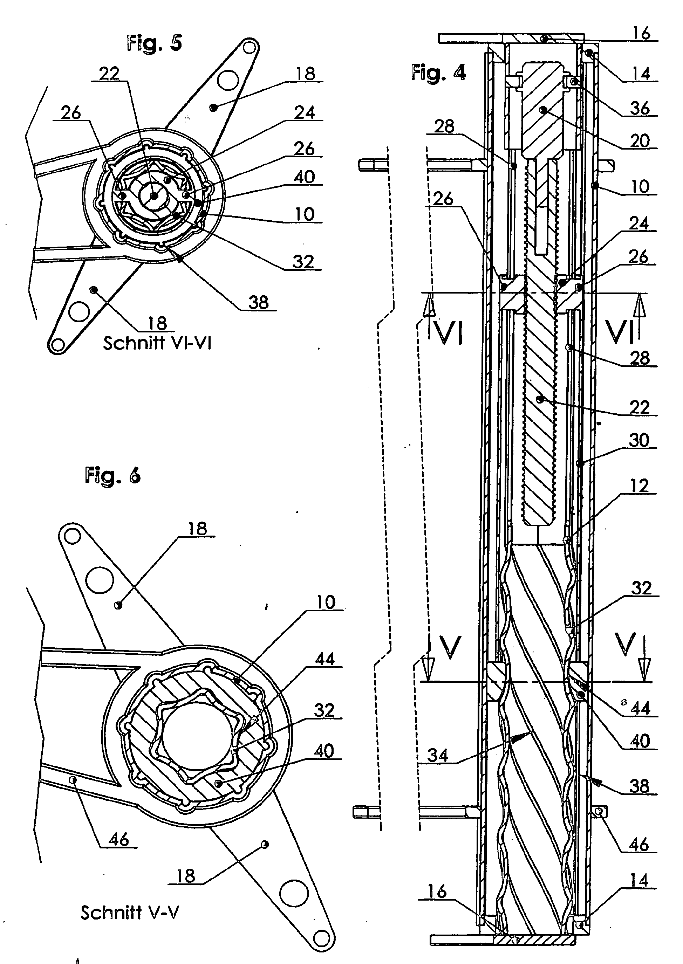

In den Figuren 4 bis 6 ist eine zweite Ausführung des Drehantriebs dargestellt. Diese Ausführung stimmt im Wesentlichen mit dem ersten Ausführungsbeispiel überein, sodass weitgehend auf dessen voranstehende Beschreibung Bezug genommen wird.

Im Gegensatz zu dem ersten Ausführungsbeispiel sind bei dem zweiten Ausführungsbeispiel der Figur 4 die Führungsschlitze 28 des Innenrohres 12 an dem motorseitigen Ende des Innenrohres 12 angeordnet. Der als Drallwelle 32 ausgebildete Abschnitt des Innenrohres 12 ist dagegen an dem vom Motor 20 abgewandten Ende des Innenrohres 12 angeordnet. Wird der Motor 20 im Antriebsdrehsinn betrieben, so bewegt sich die Spindelmutter 24 von dem Motor 20 weg und drückt mittels des Schubrohres 30 den Drallschieber 40 axial von dem Motor 20 weg, sodass der Drallschieber 40 und mit diesem das Außenrohr 10 zwangsweise gegenüber dem Innenrohr 12 und den Endstücken 16 gedreht wird. Im entgegengesetzten Drehsinn des Motors 20 wird die Spindelmutter 24 auf den Motor 20 zu gezogen, sodass das Schubrohr 30 sich axial von dem Drallschieber 40 entfernen kann und der Freilauf wirksam wird.

In den Figuren 4 und 6 ist außerdem dargestellt, wie eine Befestigungsplatte 46 formschlüssig auf dem Außenumfang des Außenrohres 10 sitzt. Mittels einer solchen Befestigungsplatte 46 kann das Außenrohr 10 an dem zugehörigen Bauteil befestigt werden.

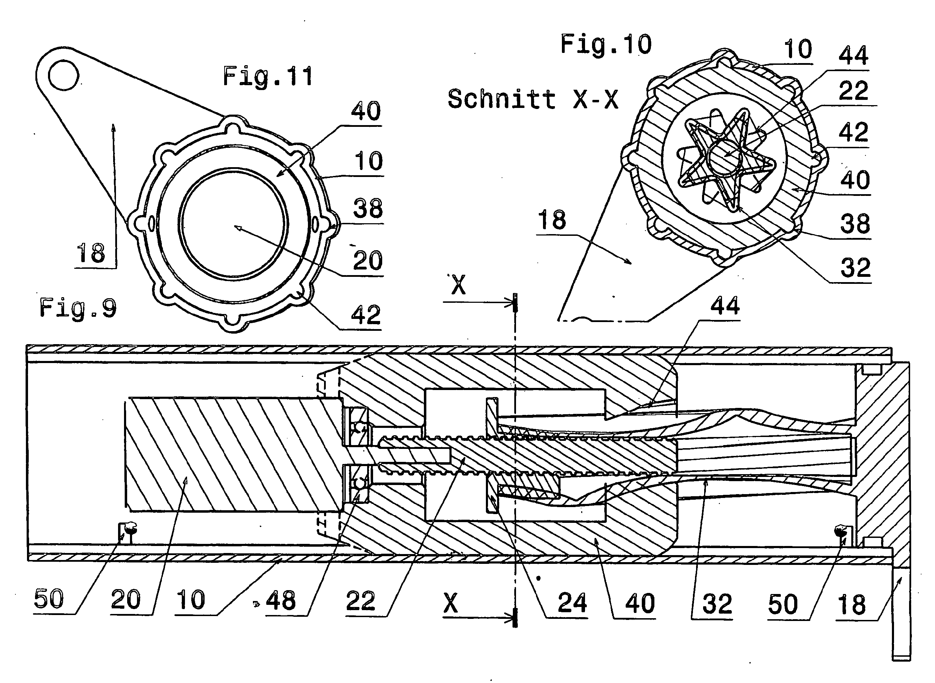

In den Figuren 9 bis 11 ist eine dritte Ausführung des Drehantriebs gezeigt. Soweit diese Ausführung mit den vorhergehenden Ausführungen übereinstimmt, sind dieselben Bezugszeichen verwendet und auf die vorangehende Beschreibung wird verwiesen.

In dem dritten Ausführungsbeispiel ist nur an einem Ende des Außenrohres 10 ein Endstück 16 drehbar gelagert, sodass der Drehantrieb nur an einem Ende, z. B. mittels einer Befestigungslasche 18, an dem einen Bauteil befestigbar ist. An dem in dem Ende des Außenrohres 10 drehbar, aber axial unverschiebbar gelagerten Endstück 16 ist koaxial die hohle Drallwelle 32 befestigt. Auf dem Steilgewinde 34 der Drallwelle 32 läuft der Drallschieber 40, der in den axialen Führungsrillen 38 des Außenrohres 10 axial verschiebbar und unverdrehbar geführt ist. Der Drallschieber 40 ist in diesem Ausführungsbeispiel als koaxiale Buchse ausgebildet, an deren einem stirnseitigen Ende das innere Gewindeprofil 44 ausgebildet ist, mit welchem der Drallschieber 40 auf der Drallwelle 32 läuft. An dem axial entgegengesetzten anderen Ende des Drallschiebers 40 ist der Motor 20 fest angeflanscht. Die Motorwelle ist in dem Drallschieber 40 mittels eines Wälzlagers 48 drehbar gelagert und treibt die Gewindespindel 22 an, die koaxial durch den Drallschieber 40 hindurch geführt ist und axial in die hohle Drallwelle 32 hineinragt. An dem innerhalb des buchsenförmigen Drallschiebers 40 liegenden freien Ende der Drallwelle 32 ist die Spindelmutter 24 fest angebracht.

Wird der Motor 20 eingeschaltet, so dreht er die Gewindespindel 22, sodass sich der Drallschieber 40 mit dem Motor 20 axial gegenüber der Drallwelle 32 mit der Spindelmutter 24 bewegt. Da der Drallschieber 40 axial verschiebbar und unverdrehbar in dem Außenrohr 10 geführt ist, bewirkt die axiale Verschiebung des Drallschiebers 40 gegenüber dem Steilgewinde 34 der Drallwelle 32 eine Relativdrehung zwischen dem mit der Drallwelle 32 verbundenen Endstück 16 und dem Außenrohr 10. Je nach Drehrichtung der Gewindespindel 22 läuft der Drallschieber 40 mit dem Motor 20 nach rechts oder nach links in dem Außenrohr 10 und das Außenrohr 10 dreht sich jeweils in entsprechendem Drehsinn gegenüber dem Endstück 16. Endschalter 50 können dabei die axiale Bewegung des Drallschiebers 40 in dem Außenrohr begrenzen. In dieser Ausführung ist kein Freilauf vorgesehen, sodass der Drehantrieb in beiden Drehrichtungen zwangsweise und motorisch angetrieben erfolgt.

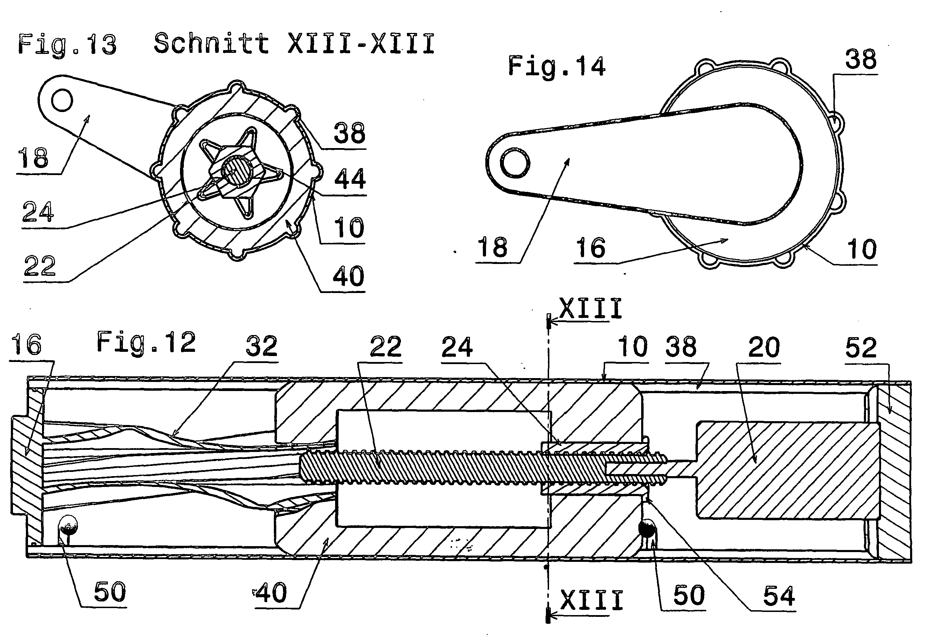

In den Figuren 12 bis 17 ist eine vierte Ausführung gezeigt, die dem dritten Ausführungsbeispiel der Figuren 9 bis 11 ähnlich ist.

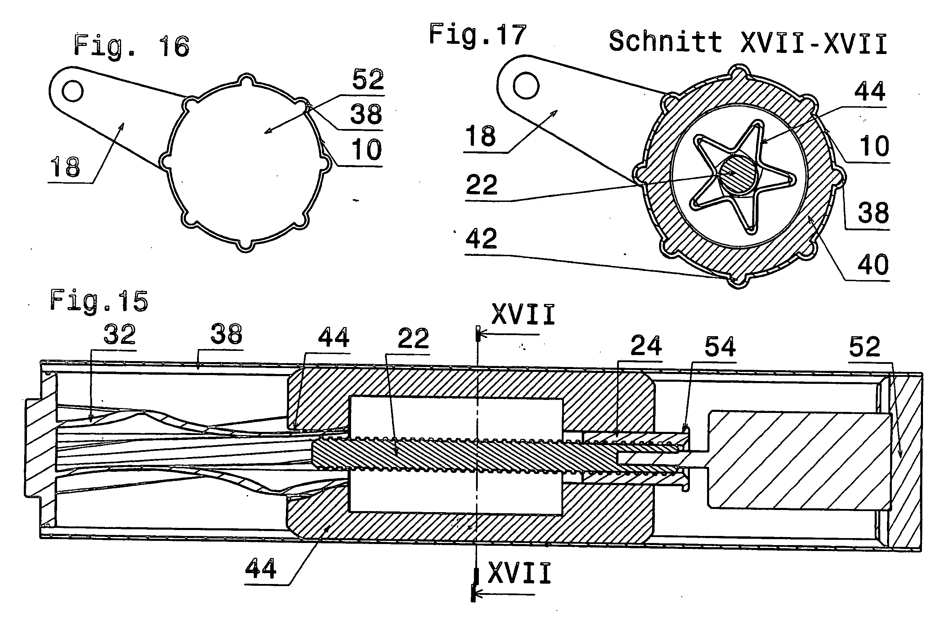

Auch hier ist die Drallwelle 32 fest mit einem drehbar in dem Außenrohr 10 gelagerten Endstück 16 verbunden. Der Drallschieber 40 ist als axiale Buchse ausgebildet, deren eine Stirnseite das innere Gewindeprofil 44 aufweist, welches auf der Drallwelle 32 läuft. Der Drallschieber 40 ist axial verschiebbar und unverdrehbar in dem Außenrohr 10 geführt. In diesem vierten Ausführungsbeispiel sitzt der Motor 20 mittels eines Endstopfens 52 drehfest und verschiebefest in dem Außenrohr 10 an dessen dem Endstück 16 und der Drallwelle 32 entgegengesetzten Ende. Auf der von dem Motor 20 angetriebenen koaxialen Gewindespindel 22 sitzt die Spindelmutter 24, die in dieser Ausführung unverdrehbar und axial verschiebbar in dem buchsenförmigen Drallschieber 40 gelagert ist. Die Spindelmutter 24 weist an ihrem dem Motor 20 zugewandten Ende einen radial verbreiterten Anschlagbund 54 auf. Im Gegensatz zu dem dritten Ausführungsbeispiel der Figuren 9 bis 11 ist bei dieser Ausführung der Drehantrieb nur in einer Drehrichtung aktiv wirksam, während er in der entgegengesetzten Drehrichtung einen Freilauf aufweist, wie er für bestimmte Anwendungen aus Sicherheitsgründen vorgeschrieben ist. Wird der Motor 20 in Antriebsrichtung betätigt, so verschiebt die Gewindespindel 22 die Spindelmutter 24 von dem Motor 20 weg, bis die Spindelmutter 24 mit ihrem Anschlagbund 54 an der Stirnseite des Drallschiebers 40 anliegt, wie dies in Figur 12 gezeigt ist. Bei einer weiteren Drehung der Gewindespindel 22 in Antriebsrichtung schiebt die Spindelmutter 24 nun den Drallschieber 40 weiter, sodass sich dieser auf der Drallwelle 32 verschiebt und in Drehung versetzt wird, wodurch sich das den Drallschieber 40 führende Außenrohr 10 gegenüber dem Endstück 16 verdreht. Wird der Motor 20 in dem entgegengesetzten Drehsinn angetrieben, so zieht die drehende Gewindespindel 22 die Spindelmutter 24 gegen den Motor 20, wobei die Spindelmutter 24 frei aus dem Drallschieber 40 heraus gezogen wird, wie dies in Figur 15 gezeigt ist, ohne dass dabei der Drallschieber 40 zwangsweise auf der Drallwelle 32 bewegt wird. Der Freilauf ist wirksam.

Die dritte und vierte Ausführungsform zeichnet sich insbesondere dadurch aus, dass sie aus einer sehr geringen Anzahl von Einzelteilen zusammengesetzt sind. Dadurch ergeben sich geringe Herstellungs- und Montagekosten.

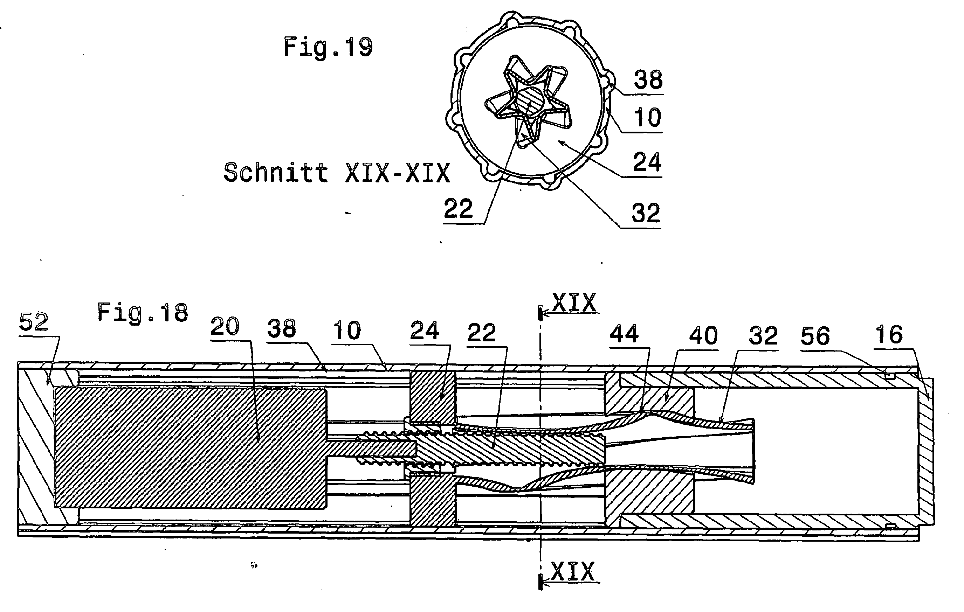

In den Figuren 18 und 19 ist eine fünfte Ausführung des Drehantriebes dargestellt.

In dieser Ausführung sitzt der Motor 20 mittels eines Endstopfens 52 drehfest und axial fest in dem Außenrohr 10. Auf der koaxialen, durch den Motor 20 angetriebenen Gewindespindel 22 läuft die Spindelmutter 24, die an ihrem Außenumfang in den Führungsrillen 38 des Außenrohres 10 axial verschiebbar und unverdrehbar geführt ist. Auf der von dem Motor 20 abgewandten Seite ist an der Spindelmutter 24 die hohle Drallwelle 32 fest angebracht. Die Gewindespindel 22 ragt koaxial in die hohle Drallwelle 32. Vorzugsweise ist die Spindelmutter 24 aus einem äußeren in dem Außenrohr 10 geführten Formteil und einer in dieses fest eingesetzten Mutter hergestellt. Die Drallwelle 32 ist an das äußere Formteil angeformt. Die Drallwelle 32 durchsetzt das innere Gewindeprofil 44 eines Drallschiebers 40. Der Drallschieber 40 ist fest verbunden mit einem Endstück 16, welches das dem Motor 20 entgegengesetzte Ende des Außenrohres 10 verschließt. Das Endstück 16 mit dem Drallschieber 40 ist in dem Außenrohr 10 drehbar aufgenommen und durch einen Sicherungsring 56 gegen eine axiale Verschiebung gesichert. Beim Antrieb des Motors 20 verschiebt sich die Spindelmutter 24 mit der Drallwelle 32 je nach Drehrichtung des Motors 20 axial in dem Außenrohr 10. Durch die Axialbewegung der Drallwelle 32 wird der Drallschieber 40 und mit diesem das Endstück 16 gegenüber dem Außenrohr 10 gedreht.

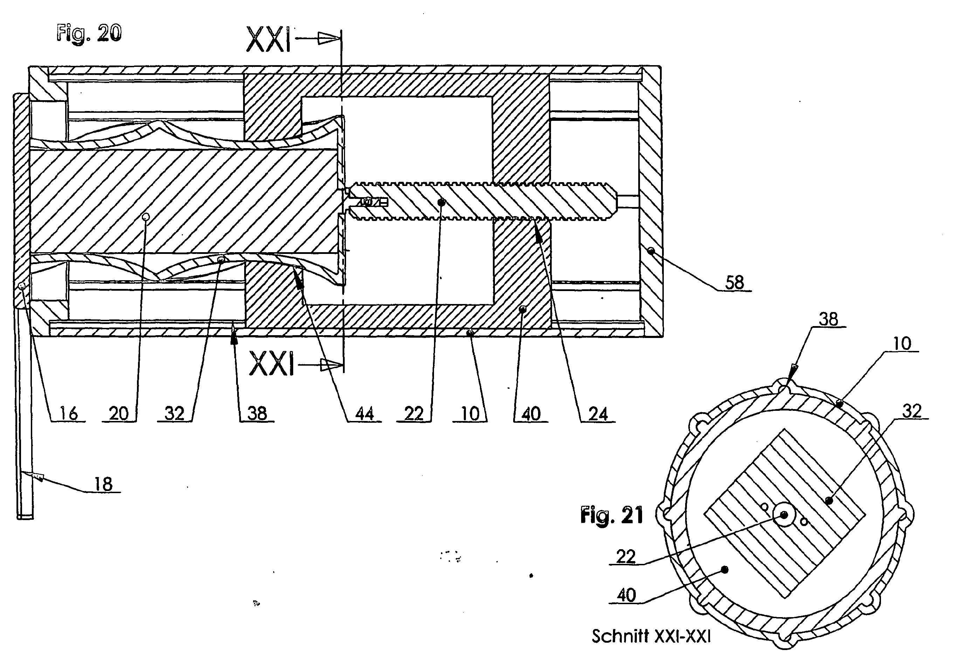

In den Figuren 20 und 21 ist eine sechste Ausführung des Drehantriebs gezeigt, die sich durch eine besonders kurze axiale Baulänge auszeichnet.

Der Motor 20 sitzt in dieser Ausführung koaxial fest in der hohlen Drallwelle 32. Der Motor 20 mit der Drallwelle 32 ist fest mit einem Endstück 16 verbunden, welches drehbar und axial unverschiebbar in dem Außenrohr 10 gelagert ist. In den Führungsrillen 38 des Außenrohres 10 ist axial verschiebbar und unverdrehbar der Drallschieber 40 gelagert. Der Drallschieber 40 ist in dieser Ausführung als Hohlbuchse ausgebildet. In der einen axialen Stirnfläche des Drallschiebers 40 ist das innere Gewindeprofil 44 ausgebildet, mit welchem der Drallschieber 40 auf der Drallwelle 32 läuft. Die andere, von dem Motor 20 abgewandte axiale Stirnfläche des Drallschiebers 40 ist als Spindelmutter 24 ausgebildet und sitzt auf der von dem Motor 20 angetriebenen und den buchsenförmigen Drallschieber 40 koaxial durchsetzenden Gewindespindel 22.

Wird der Motor 20 in Betrieb gesetzt, so treibt er die Gewindespindel 22 an, wodurch der Drallschieber 40 je nach Drehrichtung des Motors 20 auf diesen zu oder von diesem weg bewegt wird. Dadurch wird der auf der mit dem Motor 20 fest verbundenen Drallwelle 32 laufende Drallschieber 40 in Drehung versetzt und nimmt bei dieser Drehbewegung das Außenrohr 10 mit, sodass sich das Außenrohr 10 und das Endstück 16 mit bspw. einer Befestigungslasche 18 gegeneinander verdrehen. Der Drehantrieb ist nur an einem axialen Ende montierbar, während das dem Endstück 16 entgegengesetzte axiale Ende des Außenrohres 10 durch eine Abschlusskappe 58 verschlossen ist.

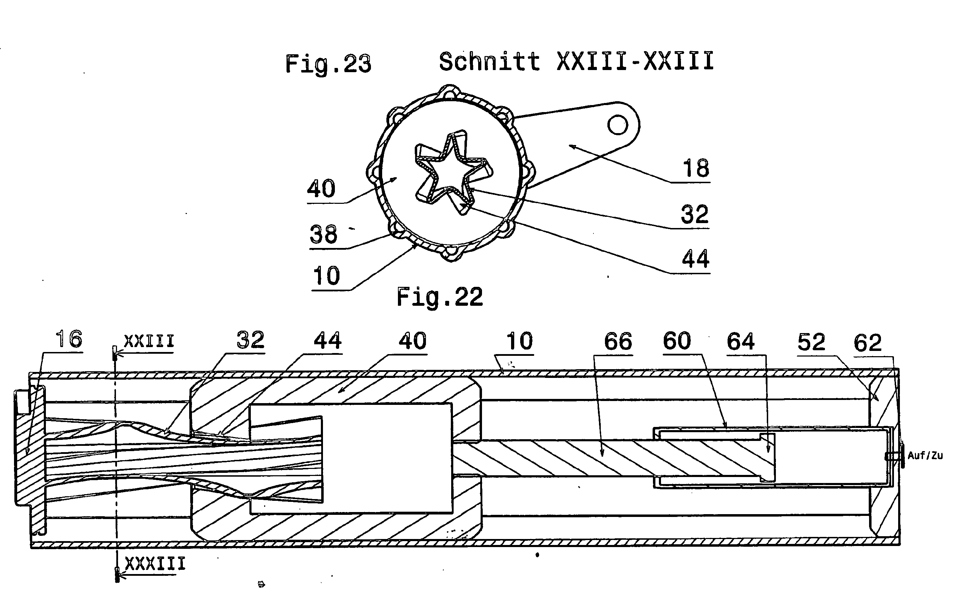

In den Figuren 22 und 23 ist eine siebte Ausführung des Drehantriebes gezeigt.

Diese Ausführung entspricht im grundsätzlichen Aufbau der Ausführung der Figuren 12 bis 17, sodass auf die dortige Beschreibung Bezug genommen wird. Im Unterschied zu der Ausführung der Figuren 12 bis 17 dient in dieser siebten Ausführung der Figuren 22 und 23 eine Gasfeder 60 anstelle eines Motors als Antriebselement. Über ein Auslöseventil 62 kann die Gasfeder 60 gesteuert betätigt werden, sodass der Druckkolben 64 axial bewegt wird. Die mit dem Druckkolben 64 verbundene Kolbenstange 66 sitzt in dem Drallschieber 40 und verschiebt diesen axial geführt in dem Außenrohr 10. Der Drallschieber 40 wird von der Drallwelle 32 durchsetzt, die mit einem drehbar in dem Außenrohr 10 gelagerten Endstück 16 verbunden ist.

Die Kolbenstange 66 kann fest in dem Drallschieber 40 angebracht sein oder kann auch axial verschiebbar in den Drallschieber 40 eingreifen und diesen nur in einer Bewegungsrichtung mit einem Anschlagbund mitnehmen, sodass der Drehantrieb nur in einer Drehrichtung aktiv wirkt und in der anderen Drehrichtung einen Freilauf aufweist, wie dies im Ausführungsbeispiel der Figuren 12 bis 17 beschrieben ist. Die Gasfeder 60 ermöglicht eine Steuerung der Axialbewegung des Drallschiebers 40 und damit der Drehbewegung zwischen Außenrohr 10 und Endstück 16, sodass der Drehantrieb dem jeweiligen Anwendungsfall bezüglich Drehgeschwindigkeit und Drehmoment angepasst werden kann. Selbstverständlich können anstelle der Gasfeder 60 auch andere fluidbetätigte, insbesondere pneumatische Antriebselemente mit entsprechender Funktion verwendet werden.

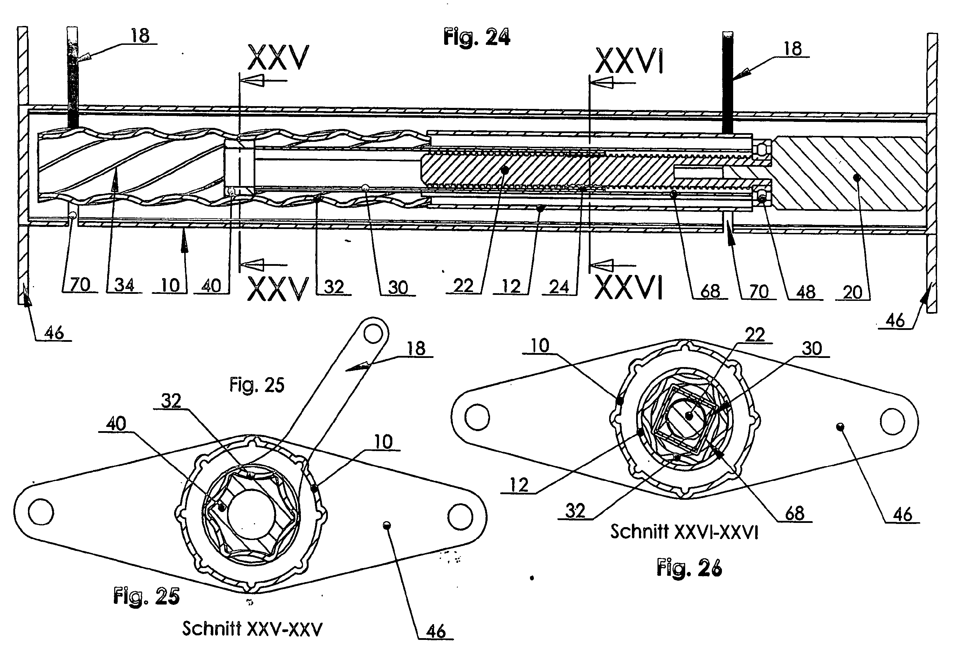

In den Figuren 24 bis 26 ist eine achte Ausführung des Drehantriebes gezeigt.

Das Außenrohr 10 ist an seinen beiden axialen Enden mittels Befestigungsplatten 46 montierbar. An einem Ende des Außenrohres 10 ist koaxial fest in diesem das Antriebselement, nämlich der Motor 20, angeordnet. Mittels eines Wälzlagers 48 ist drehbar an dem Motor 20 ein Innenrohr 12 gelagert, das in seinem dem Motor 20 entgegengesetzten Abschnitt als hohle Drallwelle 32 ausgebildet ist. Das Innenrohr 12 mit der Drallwelle 32 sind koaxial in dem Außenrohr 10 angeordnet. Der Motor 20 treibt die Gewindespindel 22 an, welche sich koaxial in dem Innenrohr 12 befindet. Auf der Gewindespindel 22 läuft die Spindelmutter 24. Die Spindelmutter 24 trägt ein Schubrohr 30, welches koaxial in dem Innenrohr 12 und der Drallwelle 32 verläuft. Das von dem Motor 20 abgewandte Ende des Schubrohres 30 trägt einen Drallschieber 40, der in dieser Ausführung im Inneren der hohlen Drallwelle 32 angeordnet ist und in das innere Steilgewinde 34 der Hohlwelle mit einem entsprechenden äußeren Gewindeprofil eingreift. Die Spindelmutter 24 mit dem Schubrohr 30 und dem Drallschieber 40 sind axial bewegbar und verdrehgesichert geführt. Hierzu ist bspw. das Schubrohr 30 mit einem unrunden Querschnitt ausgebildet und in einem Führungsrohr 68 geführt, welches axial fest und unverdrehbar an dem Motor 20 angebracht ist. Im dargestellten Ausführungsbeispiel weisen das Führungsrohr 68 und das Schubrohr 30 bspw. einen Vierkantquerschnitt auf.

Wird der Motor 20 in Betrieb gesetzt, so dreht er die Gewindespindel 22. Die Spindelmutter 24 mit dem Schubrohr 30 verschiebt sich entsprechend der Drehrichtung des Motors 20 auf der Gewindespindel 22, wodurch der Drallschieber 40 axial in der Drallwelle 32 verschoben wird und diese gegenüber dem Außenrohr 10 in Drehung versetzt. Im dargestellten Ausführungsbeispiel wird die Drehbewegung des Innenrohres 12 und der Drallwelle 32 gegenüber dem Außenrohr 10 dadurch nach außen übertragen, dass Befestigungslaschen 18 an dem Innenrohr 12 bzw. der Drallwelle 32 angebracht sind, die durch entsprechende Aussparungen 70 des Außenrohres 10 radial nach außen ragen.

Da sich der Drallschieber 40 in dieser Ausführung in Inneren der Drallwelle 32 befindet, ist dieser nicht in Führungsrillen des Außenrohres 10 axial verschiebbar und unverdrehbar geführt, sondern in dem über dem Motor 20 mit dem Außenrohr 10 fest verbundenen Führungsrohr 68.

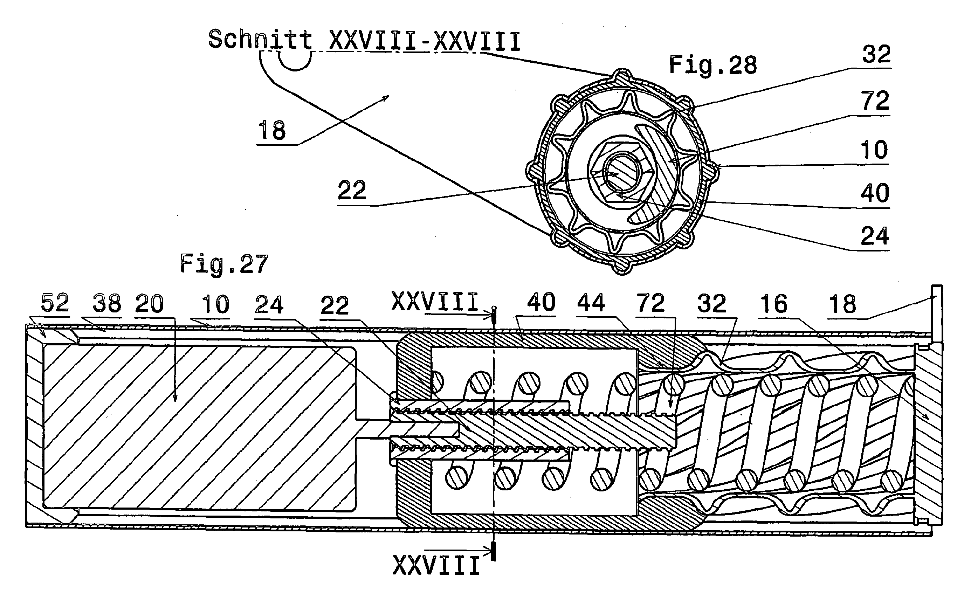

In den Figuren 27 und 28 ist eine neunte Ausführung des Drehantriebes gezeigt, bei welcher das von dem Drehantrieb übertragene Drehmoment zusätzlich noch durch eine Federkraft unterstützt wird.

In den Figuren 27 und 28 ist dies an einem Ausführungsbeispiel erläutert, welches im Grundaufbau dem Ausführungsbeispiel der Figuren 12 bis 17 entspricht. Insoweit wird auf die dortige Beschreibung verwiesen. Zusätzlich zu dem Ausführungsbeispiel der Figuren 12 bis 17 ist eine Feder 72 vorgesehen, die als Schraubendruckfeder ausgebildet ist und koaxial in der hohlen Drallwelle 32 und dem buchsenförmigen Drallschieber 40 angeordnet ist. Die Feder 72 stützt sich einerends an dem Endstück 16 ab und anderenends an dem Drallschieber 40. Die Feder 72 unterstützt den Drehantrieb des Motors 20 in einer Drehrichtung, sodass der Drehantrieb in einer Vorzugsdrehrichtung ein erhöhtes Drehmoment aufweist, während in der entgegengesetzten Drehrichtung die Feder 72 als Arbeitsspeicher gespannt wird.

Es ist für den Fachmann ohne Weiteres ersichtlich, dass eine solche Federunterstützung auch bei den anderen Ausführungen des Drehantriebs entsprechend eingesetzt werden kann. Weiter ist es ohne Weiteres ersichtlich, dass anstelle einer Schraubendruckfeder auch andere Federtypen eingesetzt werden können, z. B. Druckfedern, Zugfedern, Triebfedern oder sonstige Arbeitsspeicherelemente.

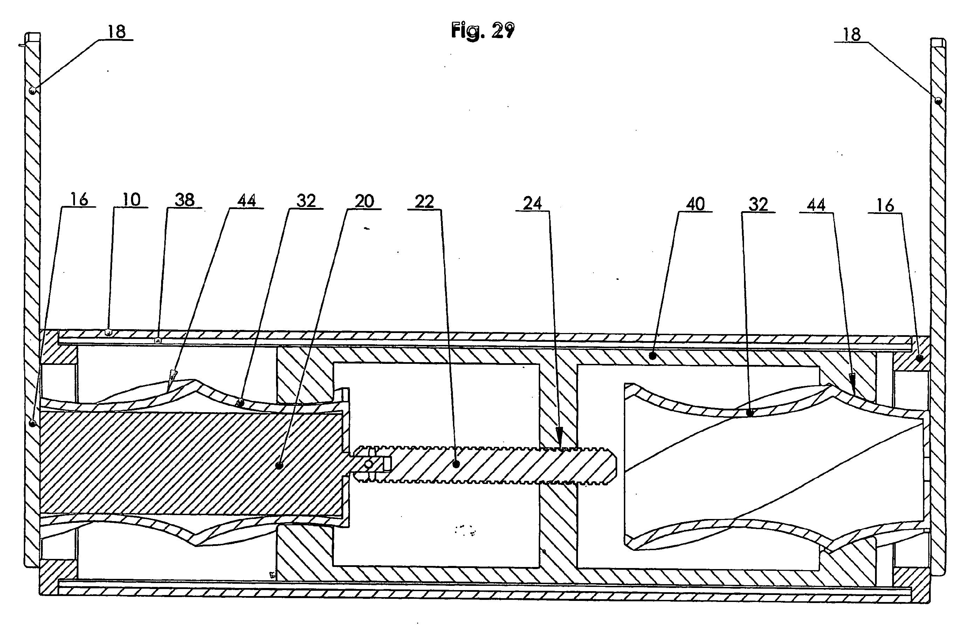

In Figur 29 ist eine zehnte Ausführung des Drehantriebes dargestellt.

Diese Ausführung baut auf der Ausführung der Figuren 20 und 21 auf, sodass auf die dortige Beschreibung Bezug genommen wird.

Während in dem Ausführungsbeispiel der Figuren 20 und 21 das dem Motor entgegengesetzte Ende des Außenrohres durch eine Abschlusskappe verschlossen ist, ist bei dem Ausführungsbeispiel der Figur 29 an dem dem Motor 20 entgegengesetzten Ende des Außenrohres 10 ebenfalls eine koaxiale Drallwelle 32 angeordnet, die mittels eines Endstückes 16 axial unverschiebbar aber drehbar in dem Außenrohr 10 gelagert ist. Der Drallschieber 40 ist als axial langgestreckte Buchse ausgebildet, die axial in dem Außenrohr 10 geführt ist. In der axialen Mitte sitzt der Drallschieber 40 mit einer Spindelmutter 24 auf der von dem Motor 20 angetriebenen Gewindespindel 22. An seinen beiden axialen Endstirnflächen ist der Drallschieber 40 jeweils mit einem inneren Gewindeprofil 44 ausgebildet, wobei das Gewindeprofil 44 des einen axialen Endes auf der einen Drallwelle 32 und das Gewindeprofil des anderen axialen Endes des Drallschiebers 40 auf der entgegengesetzten anderen Drallwelle 32 sitzt. Wenn der Motor 20 die Gewindespindel 22 antreibt, verschiebt sich der Drallschieber 40 axial in dem Außenrohr 10. Die an den beiden Enden des Drallschiebers 40 ausgebildeten inneren Gewindeprofile 44 versetzen dadurch die beiden Drallwellen 32 in Drehung, sodass die Endstücke 16 mit den bspw. daran angebrachten Befestigungslaschen 18 gegenüber dem Außenrohr 10 gedreht werden. Je nach Steigung und Windungssinn der beiden Drallwellen 32 können dabei die Endstücke 16 gleichsinnig oder gegensinnig und/oder mit gleicher oder unterschiedlicher Geschwindigkeit gedreht werden.

Einzelne vorteilhafte Ausgestaltungen des Drehantriebs sind nur bei einem oder einigen Ausführungsbeispielen dargestellt und beschrieben. Es ist für den Fachmann offensichtlich, dass solche Ausgestaltungen auch auf jeweils andere Ausführungsbeispiele übertragen werden können, bei denen diese nicht gezeigt sind.

### Bezugszeichenliste

- 10: Außenrohr
- 12: Innenrohr
- 14: Abschlusskappe
- 16: Endstück
- 18: Befestigungslasche
- 20: Motor
- 22: Gewindespindel
- 24: Spindelmutter
- 26: Vorsprünge
- 28: Führungsschlitze
- 30: Schubrohr
- 32: Drallwelle
- 34: Steilgewinde
- 36: Befestigungszapfen
- 38: Führungsrillen
- 40: Drallschieber
- 42: Vorsprünge
- 44: inneres Gewindeprofil
- 46: Befestigungsplatte
- 48: Wälzlager
- 50: Endschalter
- 52: Endstopfen
- 54: Anschlagbund
- 56: Sicherungsring
- 58: Abschlusskappe
- 60: Gasfeder
- 62: Auslöseventil
- 64: Druckkolben
- 66: Kolbenstange
- 68: Führungsrohr
- 70: Aussparungen
- 72: Feder

## Patentansprüche

1. Drehantrieb, mit einem Antriebselement (20; 60), mit einem Außenrohr (10), mit einem in wenigstens einem Ende des Außenrohres (10) drehbar, axial unverschiebbar und koaxial gelagerten Endstück (16), mit einem in dem Außenrohr (10) unverdrehbar und axial bewegbar angeordneten Drallschieber (40), mit einer koaxial in dem Außenrohr (10) angeordneten Drallwelle (32), die mit einem Steilgewinde (34) mit einem koaxialen Gewindeprofil (44) des Drallschiebers (40) zusammenwirkt, wobei die durch das Antriebselement (02; 60) bewirkte axiale Relativbewegung von Drallschieber (40) und Drallwelle (32) in eine Relativdrehung von Außenrohr (10) und Endstück (16) umgewandelt wird,
**dadurch gekennzeichnet, dass** das Antriebselement (20; 60) koaxial im Inneren des Außenrohres 10) angeordnet ist, dass das Antriebselement (20; 60) nur in einer axialen Richtung den Drallschieber (40) und die Drallwelle (32) aktiv gegeneinander bewegt, indem das Antriebselement (20; 60) in dieser einen axialen Richtung den Drallschieber (40) mit einem Schubelement (30, 54) axial drückend bewegt, und dass in der entgegengesetzten axialen Richtung ein Freilauf den Antrieb unterbricht, indem sich das Schubelement in dieser entgegengesetzten axialen Richtung von dem Drallschieber (40) wegbewegen kann.

2. Drehantrieb nach Anspruch 1,
**dadurch gekennzeichnet, dass** das Antriebselement ein Elektromotor (20) mit zum Außenrohr (10) koaxialer Motorwelle ist, der eine zum Außenrohr (10) koaxiale Gewindespindel (22) drehend antreibt, und dass eine auf der Gewindespindel (22) laufende Spindelmutter (24) die axiale Relativbewegung bewirkt.

3. Drehantrieb nach Anspruch 1,
**dadurch gekennzeichnet, dass** das Antriebselement ein fluidbetätigtes Antriebselement (60) ist, dessen Kolbenstange (66) die axiale Relativbewegung bewirkt.

4. Drehantrieb nach einem der vorhergehenden Ansprüche,
**dadurch gekennzeichnet, dass** die Drallwelle (32) eine Hohlwelle ist.

5. Drehantrieb nach Anspruch 2 oder 3 und Anspruch 4,
**dadurch gekennzeichnet, dass** die Gewindespindel (22) bzw. die Kolbenstange (66) sich koaxial in die Drallwelle (32) bewegen können.

6. Drehantrieb nach einem der vorhergehenden Ansprüche,
**dadurch gekennzeichnet, dass** das Steilgewinde (34) der Drallwelle (32) eine konstante Steigung oder eine axial variierende Steigung aufweist.

7. Drehantrieb nach einem der Ansprüche 1 bis 6,
**dadurch gekennzeichnet, dass** das Außenrohr (10) an seiner Innenwandung achsparallele Führungsrillen (38) aufweist und dass der Drallschieber (40) an seinem Außenumfang in den Führungsrillen (38) axial verschiebbar und unverdrehbar geführt ist.

8. Drehantrieb nach einem der Ansprüche 1 bis 6,
**dadurch gekennzeichnet, dass** der Drallschieber (40) in einem koaxial in dem Außenrohr (10) angeordneten und mit dem Außenrohr (10) fest verbundenen Führungsrohr (68) axial verschiebbar und unverdrehbar geführt ist.

9. Drehantrieb nach Anspruch 2,
**dadurch gekennzeichnet, dass** die Spindelmutter (24) über ein koaxiales Schubrohr (30) an dem Drallschieber (40) angreift.

10. Drehantrieb nach Anspruch 2,
**dadurch gekennzeichnet, dass** die Spindelmutter (24) an dem Drallschieber (40) angeordnet ist.

11. Drehantrieb nach Anspruch 10,
**dadurch gekennzeichnet, dass** der Drallschieber (40) als hohle Buchse ausgebildet ist, und dass in einer Stirnfläche der Buchse die Spindelmutter (24) und in einer anderen Stirnfläche das Gewindeprofil (44) für die Drallwelle (32) angeordnet sind.

12. Drehantrieb nach Anspruch 10,
**dadurch gekennzeichnet, dass** der Drallschieber (40) als hohle Buchse ausgebildet ist, dass die Spindelmutter (24) in einer axial mittleren Stirnfläche der Buchse angeordnet ist, dass in den beiden axial endseitigen Stirnflächen der Buchse jeweils ein Gewindeprofil (44) angeordnet ist und dass zwei einander entgegengesetzt gerichtete Drallwellen (32) jeweils in eines dieser Gewindeprofile (44) eingreift.

13. Drehantrieb nach einem der vorhergehenden Ansprüche,
**dadurch gekennzeichnet, dass** der Drehantrieb in einer Vorzugsdrehrichtung durch ein Arbeitsspeicherelement unterstützt wird, welches bei entgegengesetzter Bewegung gespannt wird.

14. Drehantrieb nach Anspruch 13,
**dadurch gekennzeichnet, dass** das Arbeitsspeicherelement eine Feder (72) ist.

15. Drehantrieb nach einem der vorhergehenden Ansprüche,
**dadurch gekennzeichnet, dass** das Außenrohr (10) an seinen beiden axialen Enden abdichtend geschlossen ist.

16. Drehantrieb nach Anspruch 15,
**dadurch gekennzeichnet, dass** ein axiales Endes des Außenrohres (10) durch das drehbare Endstück (16) und das andere Ende durch einen Endstopfen (52) oder eine Abschlusskappe (58) verschlossen ist, die in dem Außenrohr (10) festsitzen.

17. Drehantrieb nach Anspruch 15,
**dadurch gekennzeichnet, dass** die beiden axialen Enden des Außenrohres (10) durch gegen dieses verdrehbare Endstücke (16) verschlossen sind.

## Claims

1. A rotary drive, with a drive element (20; 60), with an outer tube (10), with an end member (16) mounted in at least one end of the outer tube (10) in a rotatable, axially non-displaceable and coaxial manner, with a swirl slide (40) arranged in the outer tube (10) in a non-rotatable and axially movable manner, with a swirl shaft (32) which is arranged in a coaxial manner in the outer tube (10) and which co-operates with a coarse thread (34) with a coaxial threaded profile (44) of the swirl slide (40), wherein the axial relative movement of the swirl slide (40) and the swirl shaft (32) caused by the drive element (02; 60) is converted into a relative movement of the outer tube (10) and the end member (16), **characterized in that** the drive element (20; 60) is arranged coaxially in the interior of the outer tube (10), the drive element (20; 60) moves the swirl slide (40) and the swirl shaft (32) actively towards each other only in one axial direction as the drive element (20; 60) moves the swirl slide (40) in an axially pressing manner with a thrust element (30, 54) in this one axial direction, and in the opposite axial direction an overrunning clutch interrupts the drive as the thrust element can move away from the swirl slide (40) in this opposite axial direction.

2. A rotary drive according to claim 1, **characterized in that** the drive element is an electric motor (20) with a motor shaft which is coaxial with the outer tube (10) and which drives in a rotary manner a threaded spindle (22) coaxial with the outer tube (10), and a spindle nut (24) running on the threaded spindle (22) causes the axial relative movement.

3. A rotary drive according to claim 1, **characterized in that** the drive element is a fluid-actuated drive element (60), the piston rod (66) of which causes the axial relative movement.

4. A rotary drive according to any one of the preceding claims, **characterized in that** the swirl shaft (32) is a hollow shaft.

5. A rotary drive according to claim 2 or 3 and claim 4, **characterized in that** the threaded spindle (22) and the piston rod (66) can move coaxially into the swirl shaft (32).

6. A rotary drive according to any one of the preceding claims, **characterized in that** the coarse thread (34) of the swirl shaft (32) has a constant pitch or an axially varying pitch.

7. A rotary drive according to any one of claims 1 to 6, **characterized in that** the outer tube (10) has axially parallel guide grooves (38) on its inner wall, and the swirl slide (40) is guided on the external periphery thereof in the guide grooves (38) in an axially displaceable and non-rotatable manner.

8. A rotary drive according to any one of claims 1 to 6, **characterized in that** the swirl slide (40) is guided in an axially displaceable and non-rotatable manner in a guide tube (68) which is arranged coaxially in the outer tube (10) and which is connected to the outer tube (10) in a fixed manner.

9. A rotary drive according to claim 2, **characterized in that** the spindle nut (24) engages on the swirl slide (40) by way of a coaxial thrust tube (30).

10. A rotary drive according to claim 2, **characterized in that** the spindle nut (24) is arranged on the swirl slide (40).

11. A rotary drive according to claim 10, **characterized in that** the swirl slide (40) is designed in the form of a hollow bush, and the spindle nut (24) is arranged in one front face of the bush and the threaded profile (44) for the swirl shaft (32) is arranged in another front face.

12. A rotary drive according to claim 10, **characterized in that** the swirl slide (40) is designed in the form of a hollow bush, the spindle nut (24) is arranged in an axially central front face of the bush, one threaded profile (44) is arranged in each case in the two axial front faces of the bush at the end, and two swirl shafts (32) directed in a mutually opposed manner engage in each case in one of these threaded profiles (44).

13. A rotary drive according to any one of the preceding claims, **characterized in that** the rotary drive is assisted in a preferential direction of rotation by a working memory element which is stressed in the case of opposed movement.

14. A rotary drive according to claim 13, **characterized in that** the working memory element is a spring (72).

15. A rotary drive according to any one of the preceding claims, **characterized in that** the outer tube (10) is closed in a sealed manner at the two axial ends thereof.

16. A rotary drive according to claim 15, **characterized in that** one axial end of the outer tube (10) is closed by the rotatable end member (16) and the other end is closed by an end plug (52) or an end cap (58), which are arranged in a fixed manner in the outer tube (10).

17. A rotary drive according to claim 15, **characterized in that** the two axial ends of the outer tube (10) are closed by end members (16) capable of being rotated towards the latter.

## Revendications

1. Entraînement en rotation comportant :
- un élément d'entraînement (20, 60),
- un tube extérieur (10),
- au moins une pièce d'extrémité (16) montée coaxialement à rotation dans au moins une extrémité du tube extérieur (10) en étant bloquée axialement,
- un coulisseau de torsion (40) installé de manière mobile mais bloqué en rotation dans le tube extérieur (10),
- un arbre torse (32) installé coaxialement dans le tube extérieur (10), cet arbre coopérant par un filetage à pas rapide (34) avec un profil fileté coaxial (44) du coulisseau de torsion (40),
- le mouvement axial relatif produit par l'élément d'entraînement (20, 60) du coulisseau de torsion (40) et de l'arbre torse (32) étant transformé en un mouvement de rotation relatif entre le tube extérieur (10) et la pièce d'extrémité (16),
entraînement **caractérisé en ce que**
- l'élément d'entraînement (20, 60) est logé coaxialement dans le tube extérieur (10),
- l'élément d'entraînement (20, 60) ne déplace le coulisseau de torsion (40) que dans une direction axiale et l'arbre torse (32) de manière active l'un par rapport à l'autre, **en ce que** l'élément d'entraînement (20, 60) déplace dans sa direction axiale, le coulisseau de torsion (40) par un élément de poussée (30, 54) en le poussant axialement, et
- dans la direction axiale opposée, une roue libre coupe l'entraînement en ce que pour cette direction axiale opposée, l'élément de poussée peut s'écarter du coulisseau de torsion (40).

2. Entraînement rotatif selon la revendication 1,
**caractérisé en ce que**
l'élément d'entraînement est un moteur électrique (20) dont l'arbre de sortie est coaxial au tube extérieur (10), et entraîne en rotation, une broche filetée (22) coaxiale au tube extérieur (10), et
un écrou fileté (24) coopère avec la broche filetée (22) pour produire un mouvement axial relatif.

3. Entraînement rotatif selon la revendication 1,
**caractérisé en ce que**
l'élément d'entraînement est un élément d'entraînement (60) commandé par un fluide et dont la tige de piston (66) produit le mouvement axial relatif.

4. Entraînement rotatif selon l'une des revendications précédentes,
**caractérisé en ce que**
l'arbre torse (32) est un arbre creux.

5. Entraînement rotatif selon la revendication 2 ou 3 et la revendication 4,
**caractérisé en ce que**
la broche filetée (22) ou la tige de piston (66), se déplacent coaxialement à l'arbre torse (32).

6. Entraînement rotatif selon l'une des revendications précédentes,
**caractérisé en ce que**
le filetage à pas rapide (34) de l'arbre torse (32), a un pas constant ou un pas variant axialement.

7. Entraînement rotatif selon l'une des revendications 1 à 6,
**caractérisé en ce que**
- le tube extérieur (10) comporte dans sa paroi intérieure, des nervures de guidage (38) parallèles à l'axe, et
- le coulisseau de torsion (40) est guidé de manière coulissante axialement et solidairement en rotation par sa périphérie extérieure dans les rainures de guidage (38).

8. Entraînement rotatif selon l'une des revendications 1 à 6,
**caractérisé en ce que**
le coulisseau de torsion (40) est logé coaxialement dans le tube extérieur (10) et il est guidé solidairement en rotation et en coulissement axial dans un tube de guidage (68) solidaire du tube extérieur (10).

9. Entraînement rotatif selon la revendication 2,
**caractérisé en ce que**
l'écrou fileté (24) coopère avec le coulisseau de torsion (40) par un tube de poussée (30) coaxial.

10. Entraînement rotatif selon la revendication 2,
**caractérisé en ce que**
l'écrou fileté (24) est porté par le coulisseau de torsion (40).

11. Entraînement rotatif selon la revendication 10,
**caractérisé en ce que**
le coulisseau de torsion (40) est en forme de manchon et une face frontale du manchon porte l'écrou fileté (24) et l'autre face frontale porte le profil fileté (44) pour l'arbre torse (32).

12. Entraînement rotatif selon la revendication 10,
**caractérisé en ce que**
- le coulisseau de torsion (40) est une douille creuse,
- l'écrou fileté (24) est installé dans une surface frontale axiale, médiane, de la douille,
- les deux surfaces frontales axiales d'extrémité de la douille comportent chacune un profil fileté (44), et
- deux arbres torse (32) dirigés en sens opposé pénètrent chacun respectivement dans l'un des profils filetés (44).

13. Entraînement rotatif selon l'une des revendications précédentes,
**caractérisé en ce que**
l'entraînement rotatif est assisté dans un sens de rotation préférentiel par un élément accumulateur d'énergie qui est mis en tension par un mouvement en sens opposé.

14. Entraînement rotatif selon la revendication 13,
**caractérisé en ce que**
l'élément accumulateur d'énergie est un ressort (72).

15. Entraînement rotatif selon l'une des revendications précédentes,
**caractérisé en ce que**
le tube extérieur (10) est fermé de manière étanche à ses deux extrémités axiales.

16. Entraînement rotatif selon la revendication 15,
**caractérisé en ce qu'**
une extrémité axiale du tube extérieur (10) est fermée par l'embout rotatif (16) et l'autre extrémité est fermée par un bouchon (52) ou un capuchon (58) solidaires du tube extérieur (10).

17. Entraînement rotatif selon la revendication 15,
**caractérisé en ce que**
les deux extrémités axiales du tube extérieur (10) sont fermées par rapport à la pièce d'extrémité (16) tournant par rapport au tube extérieur.
